# EUROPÄISCHE PATENTSCHRIFT

(11) **EP 3 434 921 B1**
(45) Veröffentlichungstag und Bekanntmachung des Hinweises auf die Patenterteilung: **06.11.2019**
(21) Anmeldenummer: 17182748.8
(22) Anmeldetag: 24.07.2017
(51) Int. Cl.: F16D 1/108, F16D 1/112, F16D 1/08, F16D 1/06

(54) **SYSTEM UMFASSEND EINE WELLE UND EINE NABE UND VERFAHREN ZUR HERSTELLUNG EINER WELLE-NABE-VERBINDUNG**
SYSTEM COMPRISING A SHAFT AND A HUB AND METHOD OF MANUFACTURING A SHAFT-HUB CONNECTION
SYSTÈME COMPRENANT UN ARBRE ET UN MOYEU ET PROCÉDÉ DE FABRICATION D'UNE LIAISON ARBRE/MOYEU

(43) Veröffentlichungstag der Anmeldung: 30.01.2019
(73) Patentinhaber: PFEIFFER VACUUM GMBH, 35614 Asslar (DE)
(72) Erfinder: Kobus, Christopher, 61279 Grävenwiesbach (DE)
(74) Vertreter: Manitz Finsterwald Patent- und Rechtsanwaltspartnerschaft mbB

(56) Entgegenhaltungen:
- WO-A1-2016/184885
- DE-A1-102004 059 251
- US-A- 5 645 365
- US-A1- 2013 337 951
- US-A1- 2016 348 730

## Beschreibung

Die vorliegende Erfindung betrifft ein System umfassend eine Welle und eine Nabe, insbesondere einen Elektromotor oder eine Vakuumpumpe mit einem Elektromotor. Die Erfindung betrifft auch ein Verfahren zur Herstellung einer Welle-Nabe-Verbindung, insbesondere für einen Elektromotor, bevorzugt für einen Elektromotor einer Vakuumpumpe.

Es sind eine Vielzahl von Welle-Nabe-Verbindungen bekannt, die ein Drehmoment form- oder kraftschlüssig von einer Welle auf eine Nabe, oder umgekehrt, übertragen können. Beispielsweise zeigen die DE 10 2004 059 251 A1, die WO 2016/184885 A1, die US 2016/0348730, die US 5,645,365 A und die US 2013/0337951 A1 jeweils ein Welle-Nabe-System nach dem Oberbegriff des Anspruchs 1.

Kraftschlüssige Verbindungen werden beispielsweise durch den Einsatz von Fremdelementen, wie z.B. Spannelementen, die die Verbindung verwirklichen, oder durch Übermaßpassungen realisiert. Fremdelemente können beispielsweise wiederholt lösbar sein, verteuern aber einerseits die Konstruktion und verschlechtern andererseits die Konzentrizität von Nabe und Welle, da die Fremdelemente selbst mit Fertigungstoleranzen behaftet sind. Eine Übermaßpassung kann beispielsweise mit einem Querpressverband oder einem Längspressverband gefügt werden. Die Konzentrizität der Verbindung, die mittels eines zylindrischen oder konischen Querpressverbands realisiert wird, ist zwar relativ genau, aber für die Montage und Demontage wird z.B. ein spezieller Ölkompressor zum Öldruckaufbau benötigt. Darüber hinaus muss die Nabe im Wesentlichen aus Vollmaterial gefertigt werden und die Welle oder die Nabe benötigen spezielle Anschlüsse für die Ölzuführung und Kanäle für die Verteilung des Öls zwischen den zu verbindenden Flächen. Die Konzentrizität der Verbindung, die mittels eines zylindrischen oder konischen Längspressverbands realisiert wird, ist ebenfalls relativ genau, aber in den meisten Fällen lassen sich weder die Nabe noch die Welle einer demontierten Verbindung wiederholt verwenden.

Formschlüssige Verbindungen können, soweit sie zum Beispiel wiederholt lösbar sein sollen, z.B. als Keilwellen-, Passfeder- oder Polygonprofilverbindung ausgeführt werden. Bei allen diesen Verbindungsarten ist die Konzentrizitätsabweichung der Nabe relativ groß. Im Falle der Keilwellen- oder Polygonprofilverbindung unterliegen sowohl die Welle als auch die Nabe einer mehr oder weniger komplizierten und kostenintensiven Bearbeitung.

Es ist eine Aufgabe der Erfindung, eine Welle-Nabe-Verbindung mit guter Konzentrizität, insbesondere bei niedrigen Herstellungs-, Montage- und/oder Wartungskosten, zu schaffen.

Diese Aufgabe wird durch ein Systems nach Anspruch 1 gelöst, und insbesondere dadurch, dass die Welle und die Nabe in zumindest einem ersten Umfangsabschnitt korrespondierende Zentrierflächen aufweisen, die gemeinsam ein erstes Zentriermittel bilden, wobei in zumindest einem von dem ersten Umfangsabschnitt verschiedenen zweiten Umfangsabschnitt wenigstens ein Mitnehmer an der Nabe und zumindest eine zu dem Mitnehmer korrespondierende Ausnehmung an der Welle, oder umgekehrt, vorgesehen sind und der Mitnehmer in die Ausnehmung zur Drehmomentübertragung eingreift, und wobei der Mitnehmer zwei in Umfangsrichtung voneinander beabstandete Seitenwände aufweist, die mit korrespondierenden Innenwänden der Ausnehmung zusammenwirken und gemeinsam mit diesen Innenwänden ein in Umfangsrichtung von dem ersten Zentriermittel beabstandetes zweites Zentriermittel bilden.

Das erfindungsgemäße System weist eine gute Konzentrizität zwischen Welle und Nabe auf und kommt insbesondere bei der Montage ohne Fremdelemente aus. Die Zentriermittel lassen sich einfach hinsichtlich ihrer Passung dimensionieren, sodass eine erwünschte Verbindungsqualität einfach herstellbar ist. Insbesondere lässt sich die Verbindung bei moderater Füge- und/oder Lösekraft im Wesentlichen spielfrei ausführen. Welle und Nabe lassen sich außerdem relativ einfach herstellen.

Die erfindungsgemäße Verbindung zwischen Welle und Nabe ist auch im Wesentlichen unabhängig von der Wellenform, lässt sich also für verschiedenste Wellendurchmesser realisieren. Insbesondere erlaubt das Vorsehen von zwei Zentriermitteln, dass Mitnehmer und Ausnehmung relativ flach ausgeführt sein können und somit für den Fall, dass die Ausnehmung in der Welle angeordnet ist, einen relativ großen wirksamen Wellendurchmesser belassen. Dies bedeutet, dass die Erfindung auch bei verhältnismäßig schmalen Wellen oder bei Hohlwellen eine gute Konzentrizität gewährleisten kann.

Bei einer Ausführungsform sind die Zentriermittel jeweils derart ausgestaltet, dass die Nabe von der Welle zumindest im Wesentlichen zerstörungsfrei lösbar ist. Dies vereinfacht die Wartung des Systems und verbessert somit seine Lebensdauer.

Bei einer weiteren Ausführungsform sind die zusammenwirkenden Flächen bei dem zweiten Zentriermittel kleiner als bei dem ersten Zentriermittel. Dies verbessert eine gezielte Dimensionierung der jeweiligen Passung und die Fügekraft kann vorteilhaft eingestellt werden.

Bei dem zweiten Zentriermittel kann mit Vorteil ein, insbesondere leichtes oder sehr leichtes, Übermaß vorgesehen werden. Die Seitenwände des Mitnehmers können, insbesondere im Hinblick auf spanende Bearbeitung, unbearbeitet bleiben.

Das erste Zentriermittel kann beispielsweise eine Spiel-, Übergangs- oder Übermaßpassung aufweisen. Insbesondere Spiel- und Übergangspassung können dafür sorgen, dass beim Zusammenfügen von Welle und Nabe korrespondierende Flächen des ersten Zentriermittels nur unwesentlich plastisch zu verformen sind und eine geringe Reibkraft verursachen.

Für das zweite Zentriermittel ist erfindungsgemäß eine, insbesondere leichte oder sehr leichte, Übermaßpassung vorgesehen. Hierdurch lässt sich die Verbindung im Wesentlichen spielfrei ausführen. Insbesondere in Verbindung mit kleinen korrespondierenden Flächen des zweiten Zentriermittels erhöht sich durch die Übermaßpassung die Fügekraft nur in Grenzen, sodass insbesondere die jeweils korrespondierenden Flächen von erstem und zweitem Zentriermittel nicht derart zerstört werden, dass De- und Wiedermontage erschwert würden.

Die hierin verwendeten Begriffe "Spiel-, Übergangs- und Übermaßpassung" beziehen sich auf den allgemein fachüblichen Bedeutungsinhalt, z.B. gemäß DIN ISO 286. Für eine Spielpassung kann z.B. gelten "Teile von Hand noch verschiebbar" und für eine Übergangspassung kann z.B. gelten "Teile mit leichten Hammerschlägen oder von Hand fügbar". Diese Definitionen beziehen sich jedoch nur auf eine Passung eines einzelnen Zentriermittels. Beispielsweise kann nämlich für das erste Zentriermittel eine Spielpassung und für das zweite Zentriermittel eine Übermaßpassung vorgesehen sein, sodass im Ergebnis Welle und Nabe nicht lediglich von Hand verschiebbar sind.

Bei einer Weiterbildung ist zumindest in einem Umfangsbereich zwischen einer der Seitenwände des Mitnehmers und der entsprechenden Zentrierfläche des ersten Zentriermittels eine Ausnehmung ausgebildet. Hierdurch lässt sich die entsprechende Zentrierfläche leichter fertigen.

Der Begriff "entsprechend" bezieht sich hier auf die Zentrierfläche an der Nabe, wenn der Mitnehmer an der Nabe angeordnet ist, und auf die Zentrierfläche an der Welle, wenn der Mitnehmer an der Welle angeordnet ist. Die Ausnehmung ist insbesondere bezüglich der Zentrierfläche zurückspringend ausgebildet, also entweder radial nach außen, wenn der Mitnehmer an der Nabe angeordnet ist, oder radial nach innen, wenn der Mitnehmer an der Nabe, ausgebildet ist.

Bei einer weiteren Ausführungsform sind mehrere erste Zentriermittel und mehrere zweite Zentriermittel in Umfangsrichtung einander abwechselnd vorgesehen, wobei insbesondere die Zahl n der ersten Zentriermittel gleich der Zahl n der zweiten Zentriermittel ist und bevorzugt n = 2, 3 oder 4 gilt. Mitnehmer können beispielsweise im Fall n = 2 oder n = 4 einander diametral gegenüberliegend, im Fall n = 3 im Winkelabstand von 120° angeordnet sein.

Insbesondere kann in Umfangsrichtung auf ein Paar aus Mitnehmer und korrespondierender Ausnehmung ein Zentrierflächenpaar folgen, und umgekehrt.

Die Zentrierflächen können sich jeweils in Umfangsrichtung z.B. über einen Teilkreis, insbesondere etwa einen Viertelkreis, erstrecken.

Bei noch einer Weiterbildung weist der Mitnehmer einen Mitnehmerkopf auf, der seitlich angefast oder abgerundet ist. Hierdurch kann ein Verkanten oder Hängenbleiben des Mitnehmers in der Ausnehmung vermieden werden.

Insbesondere kann der Mitnehmer von einem Grund der korrespondierenden Ausnehmung beabstandet sein. So kann die Wahrscheinlichkeit einer Blockade beim Fügen oder Lösen von Welle und Nabe verringert werden.

Bei einer weiteren Ausführungsform ist der Mitnehmer einstückig mit der Nabe bzw. der Welle ausgebildet. Dies stellt eine fertigungstechnisch besonders einfache Lösung dar und sorgt außerdem für eine gute Stabilität des Mitnehmers und somit für eine sichere Drehmomentübertragung.

Besonders einfach lässt sich die Nabe herstellen, wenn sie eine Mehrzahl von geschichteten formgleichen Blechen umfasst, wobei bevorzugt die Bleche einschließlich des Mitnehmers jeweils durch Stanzen hergestellt sind und insbesondere die Seitenwände des Mitnehmers nach dem Stanzen unbearbeitet sind.

Ein illustratives Beispiel der erfindungsgemäßen Verbindung vereint sowohl Spielfreiheit, d.h. eine sehr gute Konzentrizität der Nabe, mit einer wiederholten Lösbarkeit der Verbindung. Dabei muss die Nabe beispielsweise nicht aus Vollmaterial bestehen. Stattdessen kann z.B. eine als Rotor eines Elektromotors ausgebildete Nabe aus mehreren Einzelblechen zusammengesetzt sein. Die Verbindung kann z.B. zwei, insbesondere sich über einen Viertelkreis erstreckende, Zentrierflächen aufweisen, die die Konzentrizität der Nabe gewährleisten, und z.B. zwei Mitnehmer, die formschlüssig das Moment von der Nabe auf die Welle, oder umgekehrt, übertragen. Darüber hinaus dienen die Mitnehmer der zusätzlichen Zentrierung der Nabe relativ zur Welle. Im dem Fall, dass die Nabe aus Einzelblechen hergestellt ist, kann z.B. ein Innenprofil vorgestanzt werden und anschließend Zentrierflächen und Köpfe der Mitnehmer spanend, z.B. durch ein Fräsverfahren in einem Arbeitsgang, bearbeitet werden.

Die zum Mitnehmer korrespondierende Ausnehmung kann z.B. mit einem Scheibenfräser hergestellt werden, wodurch beispielsweise an einem Ausnehmungsende eine Spannungsanhäufung vermieden werden kann. Eine Höhe des Mitnehmers und eine Tiefe der Ausnehmung werden so gewählt, dass unter Berücksichtigung insbesondere von Sicherheitsanforderungen und werkstofftechnischen Aspekten das vorhandene Drehmoment übertragen wird. Dabei kann eine möglichst kleine Tiefe der Ausnehmung bevorzugt sein, um den wirksamen Wellendurchmesser möglichst groß zu halten.

Ein Kopf des Mitnehmers kann z.B. abgeschrägt oder schräg ausgebildet sein, um so ein Klemmen einer Ecke des Mitnehmerkopfes an einem Übergang zwischen einer jeweiligen Innenwand und einem Ausnehmungsgrund zu vermeiden. Der Übergang kann fertigungsbedingt eine Rundung aufweisen.

Eine Passung des ersten Zentriermittels und/oder zwischen einem Kopf des Mitnehmers und einem Grund der korrespondierenden Ausnehmung kann gemäß DIN EN ISO 286 (oder nach DIN 7157) z.B. als H7/h6- oder H6/h5-, also als Spielpassung, oder als H7/j6- oder H7/k6-, also als Übergangspassung, ausgeführt sein. Die Passung kann in Abhängigkeit einer geforderten Konzentrizität und/oder Montagefreundlichkeit gewählt werden. Eine Passung zwischen den, insbesondere unbearbeiteten, Seitenwänden des Mitnehmers und den Innenwänden der korrespondierenden Ausnehmung kann insbesondere als eine sehr leichte Übermaßpassung ausgebildet sein. Dies kann zur Beseitigung eines in der Verbindung theoretisch vorhandenen Spiels führen. Dadurch wird der Montage- und Demontagekraftaufwand zwar erhöht, er bleibt aber gering, da die plastisch zu verformenden Flächen insbesondere relativ klein sind.

Die Aufgabe der Erfindung wird auch durch das erfindungsgemäße Verfahren, gelöst, welches die folgenden Schritte umfasst: An der Welle und an der Nabe werden jeweils in zumindest einem ersten Umfangsabschnitt Zentrierflächen derart ausgebildet, dass im verbundenen Zustand die Zentrierflächen zusammenwirken und ein erstes Zentriermittel bilden. An der Welle und an der Nabe werden jeweils in zumindest einem von dem ersten Umfangsabschnitt verschiedenen zweiten Umfangsabschnitt ein Mitnehmer bzw. eine zu dem Mitnehmer korrespondierende Ausnehmung derart ausgebildet, dass im verbundenen Zustand der Mitnehmer in die Ausnehmung zur Drehmomentübertragung eingreift. An dem Mitnehmer werden zwei in Umfangsrichtung beabstandete Seitenwände und in der Ausnehmung zu den Seitenwänden korrespondierende Innenwände derart ausgebildet, dass die Seitenwände und die Innenwände gemeinsam ein zweites Zentriermittel bilden, welches eine Übermaßpassung aufweist.

Bei einer Ausführungsform wird zumindest an der Nabe die Zentrierfläche des ersten Zentriermittels durch spanende Bearbeitung hergestellt.

Bei einer weiteren Ausführungsform wird die Nabe durch Schichten einer Mehrzahl von formgleichen Blechen, insbesondere zu einem Rotor für einen Elektromotor, zusammengesetzt.

Bei noch einer weiteren Ausführungsform werden die Bleche einschließlich des Mitnehmers jeweils durch Stanzen hergestellt, wobei insbesondere die Seitenwände des Mitnehmers und/oder ein Mitnehmerkopf nach dem Stanzen unbearbeitet bleiben. So lässt sich die Nabe besonders einfach herstellen.

Das erfindungsgemäße System kann auch im Sinne der Ausführungsformen des erfindungsgemäßen Verfahrens weitergebildet werden, und umgekehrt kann das erfindungsgemäße Verfahren auch im Sinne des erfindungsgemäßen Systems und seiner Ausführungsformen weitergebildet werden.

Die Erfindung wird nachfolgend lediglich beispielhaft anhand der schematischen Zeichnung erläutert.
- Fig. 1: zeigt eine perspektivische Explosionsdarstellung eines erfindungsgemäßen Systems umfassend eine Welle und eine Nabe.
- Fig. 2: zeigt eine weitere Ausführungsform eines erfindungsgemäßen Systems in Explosionsdarstellung.
- Fig. 3: zeigt das System der Fig. 2 im Zusammenbau.
- Fig. 4: zeigt eine weitere Ausführungsform eines erfindungsgemäßen Systems in einer auf eine Stirnseite gerichteten Seitenansicht.
- Fig. 5: zeigt vergrößert einen Mitnehmer und eine korrespondierende Ausnehmung des Systems der Fig. 4.
- Fig. 6: zeigt einen weiteren vergrößerten Abschnitt des Systems der Fig. 4.
- Fig. 7 und 8: zeigen die Nabe des Systems der Fig. 4 in einer auf eine Stirnseite gerichteten Seitenansicht.
- Fig. 9: zeigt einen Längsschnitt der Nabe der Fig. 4 bis 8.

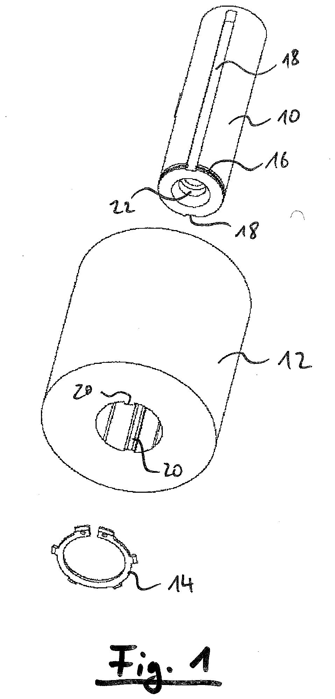

In Fig. 1 sind eine Welle 10, eine Nabe 12 sowie ein Sicherungsring 14 gezeigt. Die Welle 10 kann zur Herstellung einer Verbindung zwischen Welle 10 und Nabe 12 axial in die Nabe 12 eingeschoben werden. Anschließend wird der Sicherungsring 14 zur axialen Sicherung der Welle 10 in der Nabe 12 in eine Nut 16 der Welle 10 eingesetzt.

Die Welle 10 weist zwei gegenüberliegende, sich axial erstreckende Ausnehmungen 18 auf, die zum Eingriff mit zwei sich ebenfalls axial erstreckenden Mitnehmern 20 ausgebildet sind, welche an der Nabe 12 angeordnet sind.

Die Welle 10 weist eine Längsbohrung 22 auf, ist also als eine Hohlwelle ausgeführt.

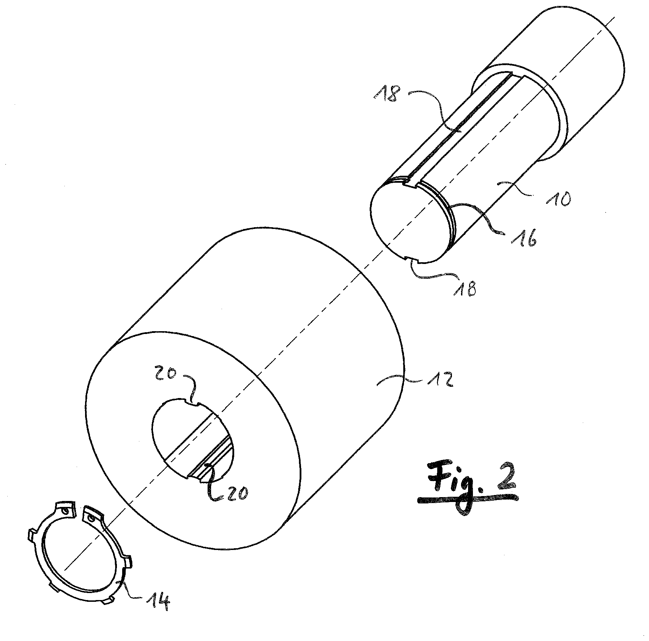

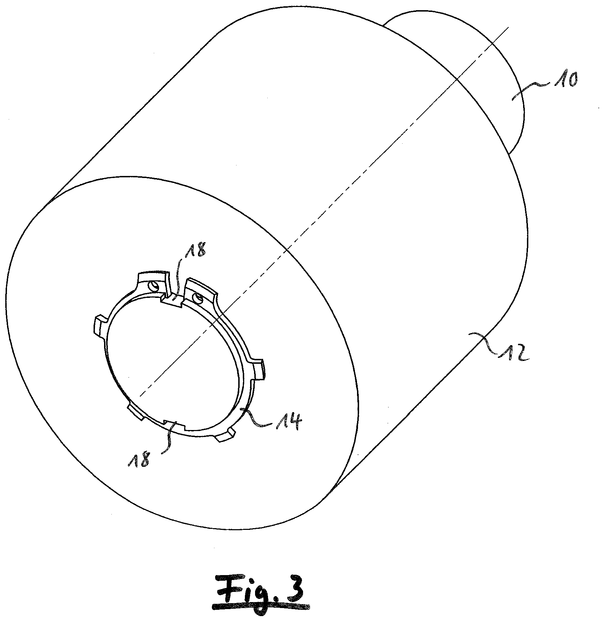

Die Fig. 2 und 3 zeigen eine Ausführungsform mit einer Vollwelle 10.

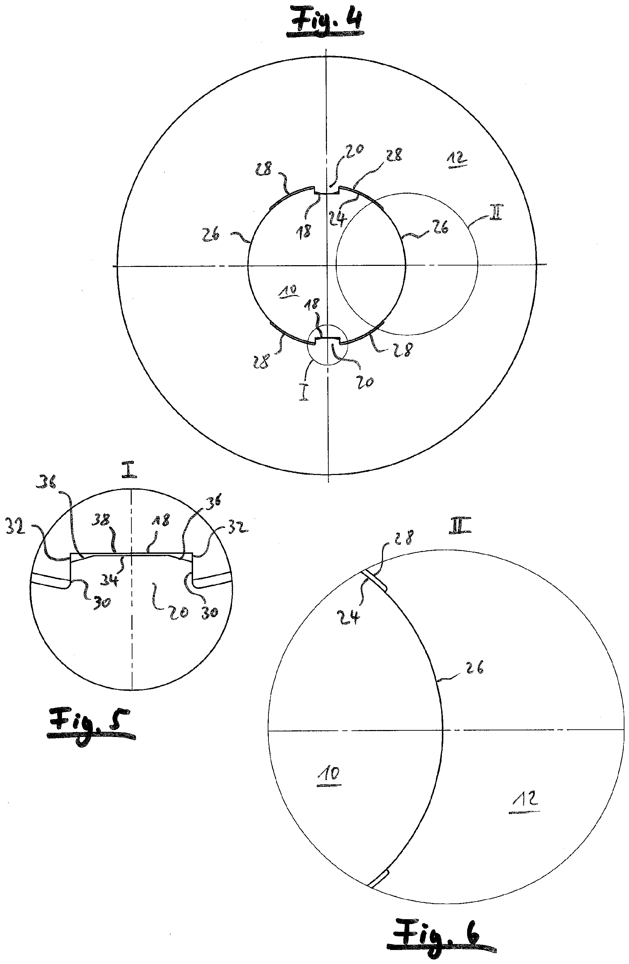

In Fig. 4 ist ein System umfassend eine Welle 10 und eine Nabe 12 im Zusammenbau gezeigt. Die Welle 10 weist eine im Wesentlichen zylindrische Umfangsfläche 24 auf, in der an gegenüberliegenden Seiten zwei Ausnehmungen 18 ausgebildet sind. Die Ausnehmungen 18 sind als im Querschnitt im Wesentlichen rechteckige Nuten ausgebildet, die sich entlang der Welle 10, in Fig. 4 senkrecht zur Bildebene, erstrecken. Im Gegensatz zu Fig. 1 ist die Welle 10 der Fig. 4 ebenfalls als Vollwelle ausgeführt.

Die Nabe 12 weist zwei Mitnehmer 20 auf, die mit den Ausnehmungen 18 der Welle 10 in Eingriff stehen. In Umfangsrichtung jeweils alternierend mit den Mitnehmern 20 weist die Nabe 12 zwei Zentrierflächen 26 auf, die unter Zusammenwirken mit der Umfangsfläche 24, welche zumindest im Bereich der Zentrierflächen 26 ebenfalls als eine Zentrierfläche wirkt, ein erstes Zentriermittel des gezeigten Welle-Nabe-Systems bilden. Die Zentrierflächen 26 erstrecken sich in dieser Ausführungsform etwa über ein Viertel des Umfangs der Welle, also etwa über einen Viertelkreis. In Umfangsrichtung sind die Zentrierflächen 26 von den Mitnehmern 20 durch Ausnehmungen 28 getrennt.

Fig. 5 zeigt einen Ausschnitt I der Fig. 4 in vergrößerter Ansicht. Wie es hier besser sichtbar ist, weist ein jeweiliger Mitnehmer 20 zwei Seitenwände 30 auf, die in Umfangsrichtung mit jeweiligen Innenwänden 32 der korrespondierenden Ausnehmung 18 zur Drehmomentübertragung in Eingriff stehen. Ein nach radial innen gerichteter Kopf 34 eines jeweiligen Mitnehmers 20 ist seitlich abgeschrägt bzw. angefast, weist also zwei Schrägen 36 auf, um ein Verklemmen oder Verkanten des Mitnehmers 20 in der Ausnehmung 18 zu verhindern. Zwischen den abgeschrägten bzw. angefasten Bereichen bzw. Schrägen 36 weist der Mitnehmerkopf 34 einen Abstand zu einem Grund 38 der Ausnehmung 18, also eine Spielpassung auf. Zwischen den Seitenwänden 30 des Mitnehmers 20 und den Innenwänden 32 der Ausnehmung 18 ist dagegen eine leichte Übermaßpassung vorgesehen. In Fig. 3 ist zur besseren Verdeutlichung allerdings ein Abstand zwischen einer jeweiligen Seitenwand 30 und der korrespondierenden Innenwand 32 gezeigt. Die Zentrierflächen 26 bilden mit der Umfangsfläche 24 insbesondere eine Spiel- oder Übergangspassung. Die Übermaßpassung zwischen den Seitenwänden der Mitnehmer 20 und den Innenwänden der Ausnehmungen 18 beseitigt ein möglicherweise ansonsten vorhandenes Spiel in der Verbindung, sorgt also für eine im Wesentlichen spielfreie Verbindung.

Aus Fig. 5 ist insbesondere ersichtlich, dass an dem durch Mitnehmer 20 und Ausnehmung 18 gebildeten, zweiten Zentriermittel, welches eine Übermaßpassung aufweist, lediglich vergleichsweise kleine korrespondierende Flächen aneinander anliegen und das zweite Zentriermittel bilden. Dagegen liegen am ersten Zentriermittel, also zwischen Zentrierflächen 26 und Umfangsflächen 24, relativ große Flächen zentrierend aneinander an. Beim Fügen der Welle-Nabe-Verbindung setzt das erste Zentriermittel dem Fügevorgang eine relativ kleine Kraft entgegen, da eine Spiel- oder Übergangspassung vorgesehen ist. Das zweite Zentriermittel setzt dem Fügevorgang zwar aufgrund der Übermaßpassung eine etwas größere Gegenkraft entgegen, da insbesondere eine plastische Verformung der Seitenwände 30 der Mitnehmer 20 bzw. der Innenwände 32 der Ausnehmungen 18 bewirkt werden muss. Diese Gegenkraft hält sich jedoch in Grenzen, da die hier aneinander liegenden Flächen relativ klein sind. Die insgesamt nötige Fügekraft ist also relativ gering und Welle 10 und Nabe 12 lassen sich im Wesentlichen ohne Zerstörung der die Zentriermittel bildenden Flächen fügen und lösen, gegebenenfalls mit Hilfe eines Werkzeugs. Hierdurch wird eine mehrfach füge- und lösbare Welle-Nabe-Verbindung geschaffen, die dennoch insbesondere im Wesentlichen spielfrei ist und/oder eine hohe Konzentrizität zwischen Welle 10 und Nabe 12 aufweist.

Ein weiterer vergrößerter Ausschnitt II der Fig. 4 ist in Fig. 6 gezeigt. Diese veranschaulicht die Anlage der Umfangsfläche 26 an der Umfangsfläche 24 der Welle 10 bzw. den Spalt zwischen der Ausnehmung 28 und der Umfangsfläche 24.

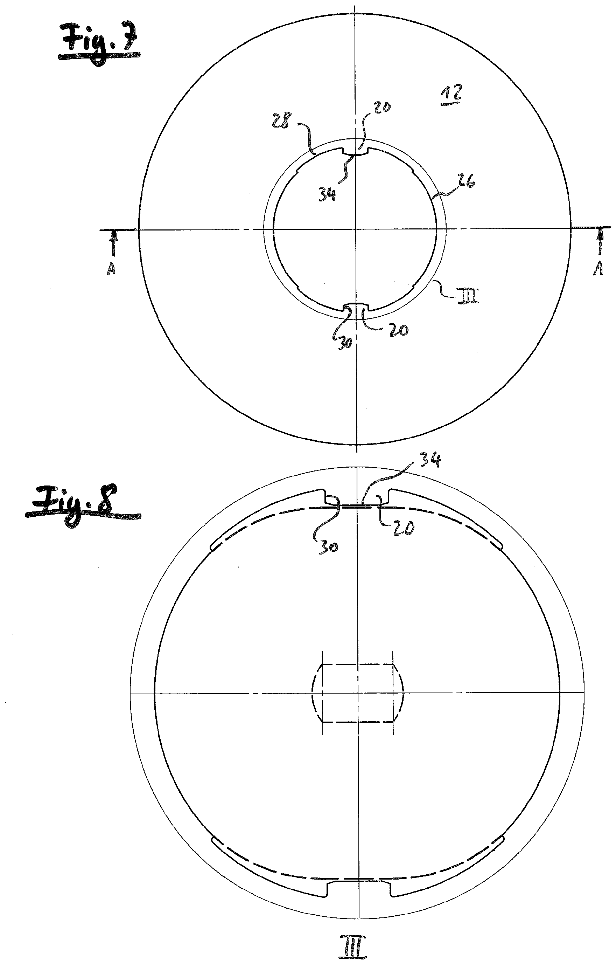

Ein beispielhaftes Herstellungsverfahren für die Nabe 12 der Fig. 4 ist in den Fig. 7 und 8 veranschaulicht. Dabei stellt die Fig. 8 eine vergrößerte Ansicht eines Ausschnitts III der Fig. 7 dar. Die Nabe 12 ist hier als Stapel von geschichteten Einzelblechen ausgebildet, die jeweils die in Fig. 7 gezeigte Form aufweisen und entlang einer Drehachse der Nabe 12, in Fig. 7 senkrecht zur Bildebene, fluchtend gestapelt sind. Mit anderen Worten ist in Fig. 7 also nur eines von einer Vielzahl von Einzelblechen der Nabe 12 sichtbar.

In Fig. 8 ist außerdem gestrichelt eine Bearbeitungskontur eines nicht dargestellten Schaftfräsers gezeigt, der sich bei der Bearbeitung ebenfalls parallel zur Drehachse der Nabe 12 erstreckt. Die jeweiligen Einzelbleche werden in ihrer Grundform gestanzt, welche im Wesentlichen der in Fig. 7 gezeigten Form entspricht. Dabei wird allerdings an den Zentrierflächen 26 ein gewisses Aufmaß belassen. Nach dem Stapeln der Einzelbleche werden dann die Zentrierflächen 26 mittels des Schaftfräsers, der sich entlang der gestrichelt angedeuteten Bearbeitungskontur bewegt, in Abhängigkeit einer jeweiligen gewünschten Passung bearbeitet. Die Mitnehmerköpfe 34 sowie die jeweiligen am Mitnehmerkopf 34 angeordneten Schrägen 36 bzw. Fasen werden in dieser Ausführungsform des Herstellungsverfahrens bereits beim Stanzen der Einzelbleche ausgebildet. Alternativ oder zusätzlich könnte aber auch hier eine spanende Bearbeitung vorgesehen sein. Die Ausnehmungen 28 sowie die jeweiligen Seitenwände 30 der Mitnehmer 20 werden in dieser Ausführungsform ebenfalls nicht spanend bearbeitet, sondern werden bereits beim Stanzvorgang ausgebildet. Auch hier kann aber eine spanende Bearbeitung vorgesehen werden.

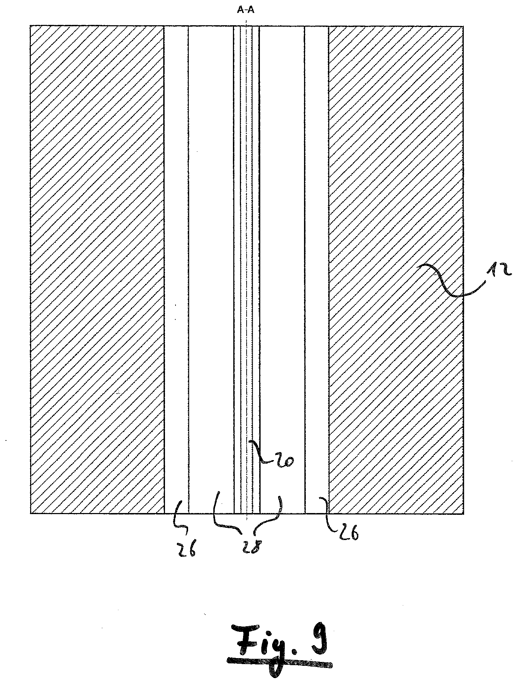

In Fig. 9 ist die Nabe 12 in einem Längsschnitt dargestellt, der entlang einer in Fig. 7 angedeuteten Schnittebene A-A verläuft. Hieraus ist ersichtlich, wie sich in dieser Ausführungsform der Mitnehmer 20, die Ausnehmungen 28 sowie die Zentrierflächen 26 in axialer Richtung erstrecken. Die Nabe 12 ist in Fig. 9 vereinfacht entsprechend einem Vollmaterial schraffiert, jedoch wie beschrieben als Stapel von Einzelblechen ausgeführt. Alternativ wäre aber auch ein Vollmaterial denkbar. Dabei könnte beispielsweise die gesamte Innenkontur der Nabe 12 spanend hergestellt sein.

Eine Welle 10 für die Nabe 12 kann zum Beispiel in ihrer Grundform als Drehteil hergestellt sein. Die Ausnehmung 18 kann beispielsweise durch einen Scheibenfräser und/oder eine Kreissäge in die Welle 10 eingebracht sein. Hierdurch kann beispielsweise sichergestellt werden, dass nach dem Fertigungsprozess keine Späne in der Ausnehmung 18 verbleiben, die die Welle 10 gegenüber der Nabe 12 blockieren und ein Fügen oder zerstörungsfreies Lösen verhindern könnten.

### Bezugszeichenliste

- 10: Welle
- 12: Nabe
- 14: Sicherungsring
- 16: Ausnehmung
- 18: Ausnehmung
- 20: Mitnehmer
- 22: Längsbohrung
- 24: Umfangsfläche
- 26: Umfangsfläche
- 28: Ausnehmung
- 30: Seitenwand
- 32: Innenwand
- 34: Kopf
- 36: Schräge
- 38: Ausnehmungsgrund

## Patentansprüche

1. System umfassend eine Welle (10) und eine Nabe (12), insbesondere Elektromotor oder Vakuumpumpe mit einem Elektromotor,
wobei die Welle (10) und die Nabe (12) in zumindest einem ersten Umfangsabschnitt korrespondierende Zentrierflächen (24, 26) aufweisen, die gemeinsam ein erstes Zentriermittel bilden,
wobei in zumindest einem von dem ersten Umfangsabschnitt verschiedenen zweiten Umfangsabschnitt wenigstens ein Mitnehmer (20) an der Nabe und zumindest eine zu dem Mitnehmer (20) korrespondierende Ausnehmung (18) an der Welle (10), oder umgekehrt, vorgesehen sind und der Mitnehmer (20) in die Ausnehmung (18) zur Drehmomentübertragung eingreift, und
wobei der Mitnehmer (20) zwei in Umfangsrichtung voneinander beabstandete Seitenwände (30) aufweist, die mit korrespondierenden Innenwänden (32) der Ausnehmung (18) zusammenwirken und gemeinsam mit diesen Innenwänden (32) ein in Umfangsrichtung von dem ersten Zentriermittel beabstandetes zweites Zentriermittel bilden,
**dadurch gekennzeichnet, dass**
das zweite Zentriermittel eine Übermaßpassung aufweist.

2. System nach Anspruch 1,
**dadurch gekennzeichnet, dass**
die Zentriermittel jeweils derart ausgestaltet sind, dass die Nabe (12) von der Welle (10) zumindest im Wesentlichen zerstörungsfrei lösbar ist.

3. System nach Anspruch 1 oder 2,
**dadurch gekennzeichnet, dass**
die zusammenwirkenden Flächen (30, 32) bei dem zweiten Zentriermittel kleiner sind als die zusammenwirkenden Flächen (24, 26) bei dem ersten Zentriermittel.

4. System nach zumindest einem der vorhergehenden Ansprüche,
**dadurch gekennzeichnet, dass**
das erste Zentriermittel eine Spiel-, Übergangs- oder Übermaßpassung aufweist.

5. System nach zumindest einem der vorhergehenden Ansprüche,
**dadurch gekennzeichnet, dass**
zumindest in einem Umfangsbereich zwischen einer der Seitenwände (30) des Mitnehmers (20) und der entsprechenden Zentrierfläche (26) des ersten Zentriermittels eine Ausnehmung (28) ausgebildet ist.

6. System nach zumindest einem der vorhergehenden Ansprüche,
**dadurch gekennzeichnet, dass**
mehrere erste Zentriermittel und mehrere zweite Zentriermittel in Umfangsrichtung einander abwechselnd vorgesehen sind, wobei insbesondere die Zahl n der ersten Zentriermittel gleich der Zahl n der zweiten Zentriermittel ist und bevorzugt n = 2, 3 oder 4 gilt.

7. System nach zumindest einem der vorhergehenden Ansprüche,
**dadurch gekennzeichnet, dass**
der Mitnehmer (20) einen Mitnehmerkopf (34) aufweist, der seitlich angefast oder abgerundet ist.

8. System nach zumindest einem der vorhergehenden Ansprüche,
**dadurch gekennzeichnet, dass**
der Mitnehmer (20) von einem Grund (38) der korrespondierenden Ausnehmung (18) beabstandet ist.

9. System nach zumindest einem der vorhergehenden Ansprüche,
**dadurch gekennzeichnet, dass**
der Mitnehmer (20) einstückig mit der Nabe (12) bzw. der Welle (10) ausgebildet ist.

10. System nach zumindest einem der vorhergehenden Ansprüche,
**dadurch gekennzeichnet, dass**
die Nabe (12) eine Mehrzahl von geschichteten formgleichen Blechen umfasst, wobei bevorzugt die Bleche einschließlich des Mitnehmers (20) jeweils durch Stanzen hergestellt sind und insbesondere die Seitenwände (30) des Mitnehmers nach dem Stanzen unbearbeitet sind.

11. Verfahren zur Herstellung einer Welle-Nabe-Verbindung, insbesondere für einen Elektromotor, bevorzugt einen Elektromotor einer Vakuumpumpe, bei dem
an der Welle (10) und an der Nabe (12) jeweils in zumindest einem ersten Umfangsabschnitt Zentrierflächen derart ausgebildet werden, dass im verbundenen Zustand die Zentrierflächen zusammenwirken und ein erstes Zentriermittel bilden,
an der Welle (10) und an der Nabe (12) jeweils in zumindest einem von dem ersten Umfangsabschnitt verschiedenen zweiten Umfangsabschnitt ein Mitnehmer (20) bzw. eine zu dem Mitnehmer (20) korrespondierende Ausnehmung (18) derart ausgebildet werden, dass im verbundenen Zustand der Mitnehmer (20) in die Ausnehmung zur Drehmomentübertragung eingreift, und
an dem Mitnehmer (20) zwei in Umfangsrichtung beabstandete Seitenwände (30) und in der Ausnehmung (18) zu den Seitenwänden (30) korrespondierende Innenwände (32) derart ausgebildet werden, dass die Seitenwände (30) und die Innenwände (32) gemeinsam ein zweites Zentriermittel bilden,
**dadurch gekennzeichnet, dass**
das zweite Zentriermittel eine Übermaßpassung aufweist.

12. Verfahren nach Anspruch 11,
**dadurch gekennzeichnet, dass**
zumindest an der Nabe (12) die Zentrierfläche (26) des ersten Zentriermittels durch spanende Bearbeitung hergestellt wird.

13. Verfahren nach Anspruch 11 oder 12,
**dadurch gekennzeichnet, dass**
die Nabe (12) durch Schichten einer Mehrzahl von formgleichen Blechen zusammengesetzt wird.

14. Verfahren nach Anspruch 13,
**dadurch gekennzeichnet, dass**
die Bleche einschließlich des Mitnehmers (20) jeweils durch Stanzen hergestellt werden, wobei insbesondere die Seitenwände (30) des Mitnehmers (20) nach dem Stanzen unbearbeitet bleiben.

## Claims

1. A system comprising a shaft (10) and a hub (12), in particular an electric motor or a vacuum pump comprising an electric motor,
wherein the shaft (10) and the hub (12) have corresponding centering surfaces (24, 26), which together form a first centering means, in at least one first peripheral section;
wherein, in at least one second peripheral section which is different from the first peripheral section, at least one entrainer (20) is provided at the hub and at least one recess (18) corresponding to the entrainer (20) is provided at the shaft (10), or vice versa, and the entrainer (20) engages into the recess (18) for torque transmission; and
wherein the entrainer (20) comprises two side walls (30) which are spaced apart from one another in the peripheral direction, which cooperate with corresponding inner walls (32) of the recess (18) and which, together with these inner walls (32), form a second centering means spaced apart from the first centering means in the peripheral direction,
**characterized in that**
the second centering means has an interference fit.

2. A system in accordance with claim 1,
**characterized in that**
the centering means are each designed such that the hub (12) is at least substantially non-destructively releasable from the shaft (10).

3. A system in accordance with claim 1 or claim 2,
**characterized in that**
the cooperating surfaces (30, 32) in the second centering means are smaller than the cooperating surfaces (24, 26) in the first centering means.

4. A system in accordance with at least one of the preceding claims,
**characterized in that**
the first centering means has a clearance fit, a transition fit or an interference fit.

5. A system in accordance with at least one of the preceding claims,
**characterized in that**
a recess (28) is at least formed in a peripheral region between one of the side walls (30) of the entrainer (20) and the corresponding centering surface (26) of the first centering means.

6. A system in accordance with at least one of the preceding claims,
**characterized in that**
a plurality of first centering means and a plurality of second centering means are provided in a mutually alternating manner in the peripheral direction, where in particular the number n of the first centering means is equal to the number n of the second centering means and where preferably n = 2, 3 or 4.

7. A system in accordance with at least one of the preceding claims,
**characterized in that**
the entrainer (20) has an entrainer head (34) which is laterally chamfered or rounded.

8. A system in accordance with at least one of the preceding claims,
**characterized in that**
the entrainer (20) is spaced apart from a base (38) of the corresponding recess (18).

9. A system in accordance with at least one of the preceding claims,
**characterized in that**
the entrainer (20) is formed in one piece with the hub (12) or with the shaft (10).

10. A system in accordance with at least one of the preceding claims,
**characterized in that**
the hub (12) comprises a plurality of stacked metal sheets of the same form, with the metal sheets, including the entrainer (20), preferably each being manufactured by punching and the side walls (30) of the entrainer in particular not being machined after the punching.

11. A method of establishing a shaft-hub connection, in particular for an electric motor, preferably for an electric motor of a vacuum pump,
in which
centering surfaces are formed at the shaft (10) and at the hub (12) in each case in at least one first peripheral section such that the centering surfaces cooperate and form a first centering means in a connected state;
an entrainer (20) and a recess (18) corresponding to the entrainer (20) are formed at the shaft (10) and at the hub (12) in each case in at least one second peripheral section which is different from the first peripheral section such that the entrainer (20) engages into the recess for torque transmission in the connected state; and
two side walls (30) which are spaced apart from one another in the peripheral direction are formed at the entrainer (20) and inner walls (32) corresponding to the side walls (30) are formed in the recess (18) such that the side walls (30) and the inner walls (32) together form a second centering means,
**characterized in that**
the second centering means has an interference fit.

12. A method in accordance with claim 11,
**characterized in that**
the centering surface (26) of the first centering means is manufactured by chip-forming machining at least at the hub (12).

13. A method in accordance with claim 11 or claim 12,
**characterized in that**
the hub (12) is assembled by stacking a plurality of metal sheets of the same form.

14. A method in accordance with claim 13,
**characterized in that**
the metal sheets, including the entrainer (20), are each manufactured by punching, with the side walls (30) of the entrainer (20) in particular remaining non-machined after the punching.

## Revendications

1. Système comportant un arbre (10) et un moyeu (12), en particulier moteur électrique ou pompe à vide comportant un moteur électrique,
dans lequel
l'arbre (10) et le moyeu (12) présentent des surfaces de centrage (24, 26) correspondantes dans au moins une première portion périphérique, qui forment conjointement un premier moyen de centrage,
dans au moins une seconde portion périphérique différente de la première portion périphérique, au moins un entraîneur (20) est prévu sur le moyeu et au moins un évidement (18) correspondant à l'entraîneur (20) est prévu sur l'arbre (10), ou inversement, et l'entraîneur (20) vient s'engager dans l'évidement (18) pour la transmission du couple de rotation, et
l'entraîneur (20) comprend deux parois latérales (30) espacées l'une de l'autre en direction périphérique, qui coopèrent avec des parois intérieures (32) correspondantes de l'évidement (18) et qui forment conjointement avec ces parois intérieures (32) un second moyen de centrage espacé du premier moyen de centrage en direction périphérique,
**caractérisé en ce que**
le second moyen de centrage présente un ajustement de surdimension.

2. Système selon la revendication 1,
**caractérisé en ce que**
les moyens de centrage sont chacun conçus de telle sorte que le moyeu (12) peut être détaché de l'arbre (10) au moins sensiblement sans destruction.

3. Système selon la revendication 1 ou 2,
**caractérisé en ce que**
les surfaces coopérant (30, 32) au niveau du second moyen de centrage sont plus petites que les surfaces coopérant (24, 26) au niveau du second moyen de centrage.

4. Système selon l'une au moins des revendications précédentes,
**caractérisé en ce que**
le premier moyen de centrage présente un ajustement de jeu, de transition ou de surdimension.

5. Système selon l'une au moins des revendications précédentes,
**caractérisé en ce que**
un évidement (28) est ménagé au moins dans une zone périphérique entre l'une des parois latérales (30) de l'entraîneur (20) et la surface de centrage correspondante (26) du premier moyen de centrage.

6. Système selon l'une au moins des revendications précédentes,
**caractérisé en ce que**
plusieurs premiers moyens de centrage et plusieurs seconds moyens de centrage sont prévus en alternance mutuelle en direction périphérique, et en particulier le nombre n des premiers moyens de centrage est égal au nombre n des seconds moyens de centrage, et de préférence n = 2, 3 ou 4.

7. Système selon l'une au moins des revendications précédentes,
**caractérisé en ce que**
l'entraîneur (20) comprend une tête d'entraîneur (34) qui est latéralement chanfreinée ou arrondie.

8. Système selon l'une au moins des revendications précédentes,
**caractérisé en ce que**
l'entraîneur (20) est espacé d'un fond (38) de l'évidement correspondant (18).

9. Système selon l'une au moins des revendications précédentes,
**caractérisé en ce que**
l'entraîneur (20) est réalisé d'un seul tenant avec le moyeu (12) ou avec l'arbre (10).

10. Système selon l'une au moins des revendications précédentes,
**caractérisé en ce que**
le moyeu (12) comprend une pluralité de tôles de même forme mises en couches, et de préférence les tôles, y compris l'entraîneur (20), sont réalisées chacune par poinçonnage et en particulier, après le poinçonnage, les parois latérales (30) de l'entraîneur ne sont pas usinées.

11. Procédé de réalisation d'une liaison arbre-moyeu, en particulier pour un moteur électrique, de préférence pour un moteur électrique d'une pompe à vide,
dans lequel
des surfaces de centrage sont réalisées sur l'arbre (10) et sur le moyeu (12) respectivement dans au moins une première portion périphérique, de telle sorte que dans l'état relié, les surfaces de centrage coopèrent et forment un premier moyen de centrage,
un entraîneur (20) ou un évidement (18) correspondant à l'entraîneur (20) est réalisé sur l'arbre (10) et sur le moyeu (12) respectivement dans au moins une seconde portion périphérique différente de la première portion périphérique, de telle sorte que dans l'état relié, l'entraîneur (20) vient s'engager dans l'évidement pour la transmission du couple de rotation, et deux parois latérales (30) espacées l'une de l'autre en direction périphérique sont réalisées sur l'entraîneur (20) et des parois intérieures (32) correspondantes aux parois latérales (30) sont réalisées dans l'évidement (18), de telle sorte que les parois latérales (30) et les parois intérieures (32) forment conjointement un second moyen de centrage,
**caractérisé en ce que**
le second moyen de centrage présente un ajustement de surdimension.

12. Procédé selon la revendication 11,
**caractérisé en ce que**
au moins sur le moyeu (12), la surface de centrage (26) du premier moyen de centrage est réalisée par usinage par enlèvement de copeaux.

13. Procédé selon la revendication 11 ou 12,
**caractérisé en ce que**
le moyeu (12) est composé par mises en couches d'une pluralité de tôles de même forme.

14. Procédé selon la revendication 13,
**caractérisé en ce que**
les tôles, y compris l'entraîneur (20), sont réalisées par poinçonnage et en particulier, après le poinçonnage, les parois latérales (30) de l'entraîneur (20) restent non usinées.
